(19) Europäisches Patentamt
European Patent Office
Office européen des brevets

(11) EP 2 547 935 B1

## (12) EUROPÄISCHE PATENTSCHRIFT

(45) Veröffentlichungstag und Bekanntmachung des Hinweises auf die Patenterteilung:
**12.09.2018 Patentblatt 2018/37**

(21) Anmeldenummer: **11705164.9**

(22) Anmeldetag: **15.02.2011**

(51) Int Cl.:
***F16K 31/56*** *(2006.01)*

(86) Internationale Anmeldenummer:
**PCT/EP2011/000686**

(87) Internationale Veröffentlichungsnummer:
**WO 2011/113510 (22.09.2011 Gazette 2011/38)**

(54) **ANTRIEB MIT NOTSCHLIESSFUNKTION**

DRIVE HAVING AN EMERGENCY CLOSING FUNCTION

SYSTÈME D'ENTRAÎNEMENT AVEC UNE FONCTION DE FERMETURE D'URGENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2010 DE 102010011516**

(43) Veröffentlichungstag der Anmeldung:
**23.01.2013 Patentblatt 2013/04**

(73) Patentinhaber: **Robert Bosch GmbH**
**70469 Stuttgart (DE)**

(72) Erfinder:
• **FRÖHLICH, Udo**
**97851 Rothenfels (DE)**

• **TAUBER, Richard**
**63869 Heigenbrücken (DE)**
• **DÖRTOLUK, Ibrahim**
**63808 Haibach (DE)**

(74) Vertreter: **Thürer, Andreas**
**Bosch Rexroth AG**
**BR/IPR**
**Zum Eisengiesser 1**
**97816 Lohr am Main (DE)**

(56) Entgegenhaltungen:
WO-A1-98/13633        DE-A1- 10 152 414
DE-A1- 10 308 017     DE-A1- 19 723 624
GB-A- 2 057 639

**Beschreibung**

Die Erfindung betrifft einen Antrieb mit Notschließfunktion gemäß dem Oberbegriff des Patentanspruchs 1.

Bei Antrieben mit Notschließfunktion sind verschiedene Ansätze bekannt.

In der Druckschrift DE 101 52 414 A1 und in der Druckschrift DE 197 23 624 A1 sind hydraulische Antriebe für Ventilkörper von Ventilen mit einer festen mechanischen Kopplung zwischen einem Betätigungszylinder und dem Ventilkörper gezeigt. In den Druckschriften GB 2 057 639 A und WO 98/13633 sind hydraulische Antriebe für Ventilkörper von Ventilen mit einer festen mechanischen Kopplung zwischen einer Betätigungsvorrichtung und dem Ventilkörper gezeigt. Der Ventilkörper ist durch eine jeweilige Notfeder in Schließrichtung des jeweiligen Ventils vorgespannt, über die das Ventil im Falle einer Störung geschlossen werden kann.

Nachteilig an derartigen hydraulischen Antrieben ist, dass bei jeder Einstellbewegung des Ventilkörpers durch den Antrieb (Betätigungszylinder oder Betätigungsvorrichtung) die Notfeder ent- oder gespannt wird.

Die Druckschrift DE 103 08 017 B4 zeigt einen hydraulischen Antrieb mit einer mechanischen Kopplung und mit einer Notfeder, wobei in einem Normalbetrieb die Notfeder in gespanntem Zustand mit der Kopplung mitbewegt wird. In einem Notbetrieb wird eine die Notfeder gespannt haltende Kniehebelvorrichtung ausgelöst, so dass sich die Notfeder entspannt und dabei die mechanische Kopplung aufspreizt bzw. verlängert. Dadurch wird das Ventil geschlossen.

Nachteilig an letztgenannten Antrieben ist der vorrichtungstechnische Aufwand für die mechanische Auslösefunktion, die mit der Notfeder mitbewegt werden muss.

Dem gegenüber liegt der Erfindung die Aufgabe zu Grunde, einen vorrichtungstechnisch einfachen Antrieb mit Notschließfunktion zu schaffen.

Diese Aufgabe wird gelöst durch einen Antrieb mit Notschließfunktion mit den Merkmalen des Patentanspruchs 1.

Der erfindungsgemäße Antrieb mit Notschließfunktion hat eine - vorzugsweise translatorisch - bewegliche Kopplungseinrichtung, die eine zwischen einer antriebseitigen und einer abtriebseitigen Federanlage eingespannten Notfeder aufweist. Erfindungsgemäss ist die Notfeder eine mit der Kopplungseinrichtung mitbewegte Druckfeder. Ein Abstand der Federanlagen ist in einem Normalbetrieb des Antriebs über eine Sperrvorrichtung festgelegt, wobei sich die Notfeder nach einem Lösen oder Entsperren der Sperrvorrichtung für eine Notfunktion oder Notbewegung des Antriebs entspannen kann. Dabei ist die Sperrvorrichtung erfindungsgemäß hydraulisch oder pneumatisch und/oder magnetisch betätigt bzw. auslösbar. Damit verringert sich der vorrichtungstechnische Aufwand für die mitbewegten Teile der Sperrvorrichtung gegenüber dem Stand der Technik.

Weitere vorteilhafte Ausgestaltungen der Erfindung sind in den abhängigen Patentansprüchen beschrieben.

Bei einer bevorzugten Weiterbildung ist ein Verstellantrieb vorgesehen, von dem eine translatorische antriebseitige Bewegung erzeugt werden kann, die über die Kopplungseinrichtung in eine translatorische abtriebseitige Bewegung eines Ventilkörpers eines Ventils übertragen wird. Nach dem Lösen oder Entsperren der Sperrvorrichtung kann ersatzweise von der Notfeder eine translatorische abtriebseitige Bewegung des Ventilkörpers in eine Schließrichtung des Ventils erzeugt werden.

Eine bevorzugte Weiterbildung hat einen ortsfesten Zylinder und einen darin aufgenommenen abtriebseitigen Kolben, die zusammen einen abtriebseitigen Ringraum bilden. Der abtriebseitige Kolben ist dabei über eine abtriebseitige Kolbenstange mit der abtriebseitigen Federanlage verbunden. Dies erlaubt feste Zuleitungen zum ortsfesten Zylinder und Pumpbewegungen.

Ein Dämpfer, der während der Notfunktion oder Notbewegung am Ende der abtriebseitigen Bewegung in Schließrichtung wirksam ist, schützt vor Schlägen der abtriebseitigen Kolbens und ggf. des Ventils nach dem Lösen oder Entsperren der Sperrvorrichtung.

Bei einem bevorzugten Ausführungsbeispiel ist der Dämpfer ein fluidischer Endlagendämpfer. Dabei hat er vorzugsweise einen am abtriebseitigen Ringraum gebildeten Dämpfungsraum mit gegenüber dem abtriebseitigen Ringraum verringertem Durchmesser, während die abtriebseitige Kolbenstange einen Dämpfungszapfen mit gegenüber der abtriebseitigen Kolbenstange vergrößertem Durchmesser hat. Wenn der Dämpfungszapfen in den Dämpfungsraum eintaucht, wird der letzte Teil der Bewegung gedämpft.

Bei einer Weiterbildung des erfindungsgemäßen Antriebs hat der Zylinder einen antriebseitiger Kolben, der über eine entsprechende antriebseitige Kolbenstange mit der antriebseitigen Federanlage verbunden ist. Dabei durchsetzt die antriebseitige Kolbenstange einen entsprechenden antriebseitigen Ringraum.

Um eine Umkehrung der Schließrichtung zu ermöglichen, können der Verstellantrieb und der antriebseitige Kolben über eine Verbindungsstange gekoppelt sein, die die abtriebseitige Federanlage, die abtriebseitige Kolbenstange und den abtriebseitigen Kolben durchdringt.

Bei einer Variante des Ventils ist dieses ein Butterflyventil, wobei der Ventilkörper eine Schließplatte ist. Die Kopplungseinrichtung ist dann über einen Schwenkantrieb mit einer Welle der Schließplatte verbunden, über die die Schließplatte und damit das Ventil eingestellt wird.

Wenn der Verstellantrieb auf einer ersten Seite der Welle bzw. des Butterflyventils angeordnet ist, und die Notfeder auf einer der ersten Seite gegenüber liegenden zweiten Seite der Welle oder des Butterflyventils angeordnet ist, ist eine platzsparende Weiterbildung des Antriebs für das Butterflyventil geschaffen.

Bei einer bevorzugten Weiterbildung des erfindungsgemäßen Antriebs sind die beiden Ringräume über eine Kopplungsleitung hydraulisch koppelbar bzw. verbindbar. Dabei sind die beiden Kolben zwischen den beiden Ringräumen angeordnet. Dadurch können die beiden Kolben mit einem gemeinsamen Druck eines Druckmittels der beiden zugeordneten Ringräume in Anlage miteinander gehalten oder gegeneinander gepresst werden und somit die beiden Federanlagen in einem vorbestimmten Abstand zueinander gehalten werden.

Die Kopplungsleitung oder der abtriebseitige Ringraum sind vorzugsweise über eine Niederdruckleitung mit einem Niederdruckspeicher verbindbar oder dauerhaft verbunden. Dahin kann bei einen voneinander weg gerichteten Bewegung der Kolben insbesondere nach Entsperren der Sperrvorrichtung überschüssiges Druckmittel abströmen. Dies geschieht z.B. bei der hydraulischen Sperrvorrichtung durch Unterschreiten eines vorbestimmten Drucks in den beiden Ringräumen.

Wenn in der Niederdruckleitung und/oder in der Kopplungsleitung direkt vor dem abtriebseitigen 3/2-Wegesitzventil eine Blende angeordnet ist, kann darüber eine Geschwindigkeit der Bewegung in Schließrichtung des abtriebseitigen Kolbens nach einem Entsperren der Sperrvorrichtung eingestellt werden.

Zu Belüftung des Raumes, der zwischen den beiden Kolben bei deren voneinander weg gerichteten Bewegung entsteht, wird ein als Bohrung ausgebildeter Belüftungskanal bevorzugt, die einen der beiden Kolben und die zugeordnete Kolbenstange, z.B. antriebseitig, durchsetzt.

Vorzugsweise ist eine über den gemeinsamen Druck der beiden Druckräume erzeugte Anpresskraft zwischen den beiden Kolben größer als die Summe einer Kraft der Notfeder und einer zur Bewegung des Ventilkörpers nötigen Kraft. Damit kann im Normalbetrieb die translatorischen Bewegung des Verstellantriebs sicher an den Ventilkörper übertragen werden, ohne dass die beiden Kolben sich voneinander weg bewegen.

Bei einer bevorzugten Weiterbildung des erfindungsgemäßen Antriebs ist in der Kopplungsleitung ein abtriebseitiges 3/2-Wegesitzventil angeordnet, an das die Niederdruckleitung angeschlossen ist. Mit diesem Ventil kann die hydraulische Sicherungsvorrichtung gelöst werden. Daraufhin kann bei Bewegung des abtriebseitigen Kolbens in Schließrichtung das überschüssige Druckmittel aus dem abtriebseitigen Ringraum über die Kopplungsleitung in den Niederdruckspeicher strömen. Vorzugsweise ist in einer durch eine Feder vorgespannten Grundstellung eines Ventilkörpers des 3/2-Wegesitzventils der abtriebseitige Ringraum mit dem Niederdruckspeicher verbunden.

Bei einer bevorzugten Weiterbildung ist der Dämpfungsraum über eine Bypassleitung an einen Abschnitt der Kopplungsleitung angeschlossen, der der das abtriebseitige 3/2-Wegesitzventil und dem abtriebseitigen Ringraum verbindet. Dabei ist in einem zur Bypassleitung parallelen Abschnitt der Kopplungsleitung ein Rückschlagventil angeordnet, das vom abtriebseitigen 3/2-Wegesitzventil zum abtriebseitigen Ringraum öffnet. Damit ist eine vorrichtungstechnisch einfache Dämpfung für den letzten Teil der Notbewegung geschaffen, bei dem das Druckmittel des abtriebseitigen Ringraums über den Dämpfungsraum und über die Bypassleitung zur Kopplungsleitung strömt. Dieser Druckmittelströmungspfad gilt auch für eine Bewegung in Schließrichtung im Normalbetrieb.

Bei einer bevorzugten Variante des Antriebs ist der Verstellantrieb hydraulisch oder pneumatisch und hat einen Zylinder, insbesondere einen Gleichgangzylinder, dessen Kolbenstange über einen Kolben von einer als Pumpe betreibbaren Maschine bewegbar ist. An der Kolbenstange ist die antriebsseitige Federanlage befestigt.

Wenn dabei eine Druckmittelverbindung von der als Pumpe betreibbaren Maschine zum Zylinder - insbesondere über ein 4/2-Wegeventil - absperrbar ist, und wenn die Maschine über eine Hochdruckleitung mit der Kopplungsleitung und über eine Nachsaugleitung mit dem Niederdruckspeicher verbunden ist, dann kann eine Pumpfunktion zur Erhöhung der Anpresskraft zwischen dem antriebsseitigen und dem abtriebsseitigen Kolben realisiert werden.

Zur Vermeidung von Kavitation kann die Nachsaugleitung über zwei Verzweigungsleitungen, in denen je ein Rückschlagventil angeordnet ist, mit beiden Arbeitsanschlüssen der Maschine verbunden sein.

Die Niederdruckleitung und die Kopplungsleitung können über eine Nachsaugleitung verbunden sein, in der ein von der Niederdruckleitung zur Kopplungsleitung öffnendes Rückschlagventil angeordnet ist. Damit kann bei einer Bewegung des antriebseitigen Kolbens in Schließrichtung Druckmittel aus dem Niederdruckspeicher in den antriebseitigen Ringraum nachgesaugt werden.

Bei einer bevorzugten Weiterbildung des erfindungsgemäßen Antriebs ist in der Kopplungsleitung ein antriebseitiges 3/2-Wegesitzventil angeordnet ist, über das der antriebseitige Ringraum über eine Hochdruckleitung mit einem Hochdruckspeicher verbindbar ist. Bei dieser Weiterbildung kann der antriebseitige Ringraum direkt und der abtriebseitige Ringraum indirekt über die Kopplungsleitung mit Hochdruck beaufschlagt werden. Mit diesem Hockdruck können die beiden Kolben zusammengepresst werden.

Wenn die Niederdruckleitung und die Hochdruckleitung über eine Nachsaugleitung verbunden sind, in der ein von der Niederdruckleitung zur Hochdruckleitung öffnendes Rückschlagventil angeordnet ist, kann aus dem Niederdruckspeicher Druckmittel zur Hochdruckleitung nachgesaugt werden.

Wenn dabei in der Hochdruckleitung zwischen den Hochdruckspeicher und einem Anschluss der Nachsaugleitung zumindest eine Blende angeordnet ist, zu der in einer parallelen Bypassleitung ein zum Hochdruckspeicher öffnendes Rückschlagventil angeordnet ist, ist eine Pumpfunktion über den Verstellantrieb möglich. Dabei wird Druckmittel aus dem antriebseitigen Ringraum über das Rückschlagventil in den Hochdruckspeicher gepumpt, und danach wird Druckmittel aus dem Niederdruckspeicher in den antriebseitigen Ringraum nachgesaugt, wobei ein Zurückströmen von Druckmittel aus dem Hochdruckspeicher über die zumindest eine Blende weitgehend verhindert wird.

Um ein Nachrücken des abtriebseitigen Kolbens in Richtung zum antriebseitigen Kolben und damit in Öffnungsrichtung des Ventilkörpers während der Pumpfunktion zu verhindern, kann ein Abschnitt der Kopplungsleitung, der zwischen dem Rückschlagventil und dem abtriebseitigen 3/2-Wegesitzventil angeordnet ist, über ein 3/2-Wegesitzventil wechselweise mit der Niederdruckleitung oder mit der Hochdruckleitung verbindbar ausgeführt sein. Dabei sind in einer den Abschnitt der Kopplungsleitung mit dem 3/2-Wegesitzventil verbindenden Leitung eine Blende und ein zum 3/2-Wegesitzventil öffnendes Rückschlagventil angeordnet.

Eine bevorzugte Weiterbildung des erfindungsgemäßen Antriebs hat einem Trag- oder Befestigungselement, das als Hydraulikblock ausgebildet ist, an dem oder in dem der oder die Druckspeicher, die Ventile und die Kanäle und der Zylinder angeordnet sind.

Bei einer bevorzugten Variante oder bei einer bevorzugten Weiterbildung des erfindungsgemäßen Antriebs ist eine magnetische Sperrvorrichtung alternativ oder in Ergänzung zur hydraulischen Sperrvorrichtung vorgesehen. Diese hat einen Elektromagneten, der einer Spule und einen Anker aufweist, die jeweils mit einer der beiden Federanlagen verbunden sind. Diese Sperrvorrichtung kann elektrisch betätigt werden, wobei eine Abschalten oder Ausfall eines elektrischen Stroms ein Entsperren der Sperrvorrichtung und somit eine Notfunktion oder Notbewegung einleitet.

Die Spule und der Anker können jeweils ringförmig angeordnet und über ein Abstandsteil an der zugeordneten Federanlage befestigt sein, wobei die Notfeder geschützt im Innern der beiden Abstandsteile angeordnet ist.

Wenn die magnetische Sperrvorrichtung einen Permanentmagneten aufweist, der z.B. 80 % der Magnetkraft bereit stellt, reduziert sich der Energiebedarf des Elektromagneten während der Normalfunktion.

Vorzugsweise ist der Verstellantrieb mit der antriebseitigen Federanlage verbunden. Der Verstellantrieb kann elektrisch, z.B. als Elektromotor mit Spindeltrieb, hydraulisch, z.B. mit Hydrozylinder, oder pneumatisch, z.B. mit Pneumatikzylinder, ausgeführt sein.

Vorzugsweise ist zwischen den beiden Kolben ein Dämpfungselement angeordnet. Damit wird verhindert, dass vom Ventilkörper eingeleitete Schwingungen über die beiden Kolben an den Verstelltrieb - insbesondere Spindeltrieb -übertragen werden.

Im Folgenden wird anhand der Figuren verschiedene Ausführungsbeispiels der Erfindung detailliert beschrieben. Es zeigen:

Figur 1 ein erstes Ausführungsbeispiel eines erfindungsgemäßen Antriebs mit einem Verstellantrieb, einer hydraulischen Anordnung und einer Kopplungseinrichtung mit hydraulischer Sperrvorrichtung in einer schematischen Darstellung;

Figur 2 den Verstellantrieb und die Kopplungseinrichtung des ersten Ausführungsbeispiels gemäß Figur 1;

Figur 3 die hydraulische Anordnung des ersten Ausführungsbeispiels gemäß Figur 1;

Figur 4 die Kopplungseinrichtung und die hydraulische Anordnung des ersten Ausführungsbeispiels des erfindungsgemäßen Antriebs in der Notfunktion;

Figur 5 eine Kopplungseinrichtung mit hydraulischer und magnetischer Sperrvorrichtung und eine hydraulische Anordnung eines zweiten Ausführungsbeispiels des erfindungsgemäßen Antriebs in einer schematischen Darstellung;

Figur 6 eine Kopplungseinrichtung mit magnetischer Sperrvorrichtung und eine hydraulische Anordnung eines dritten Ausführungsbeispiels des erfindungsgemäßen Antriebs in einer schematischen Darstellung;

Figur 7 eine Kopplungseinrichtung mit magnetischer Sperrvorrichtung und eine hydraulische Anordnung eines vierten Ausführungsbeispiels des erfindungsgemäßen Antriebs in einer schematischen Darstellung; und

Figuren 8a bis 8d ein fünftes Ausführungsbeispiel eines erfindungsgemäßen Antriebs mit einem Verstellantrieb, einer hydraulischen Anordnung und einer Kopplungseinrichtung mit hydraulischer Sperrvorrichtung in einer schematischen Darstellung.

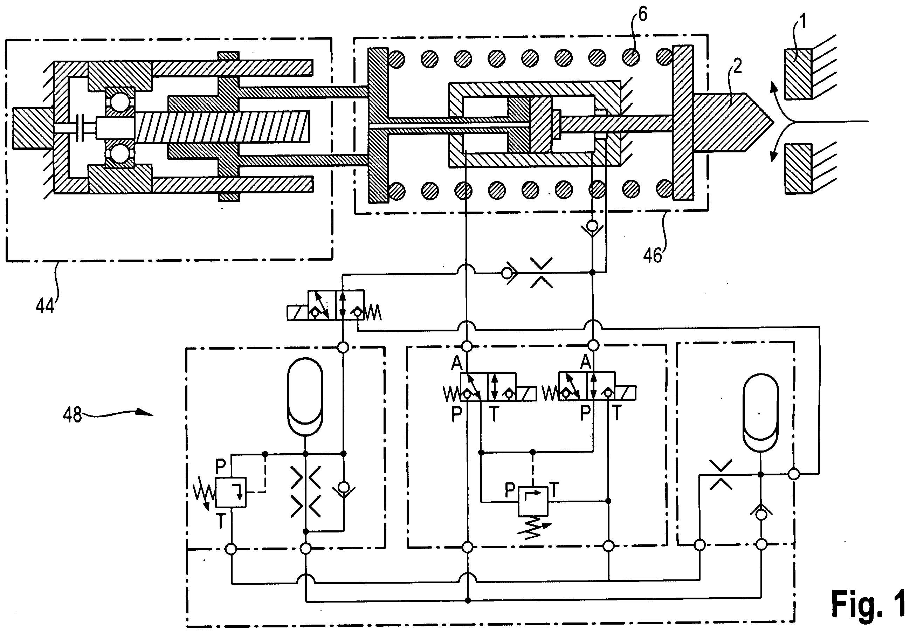

Figur 1 zeigt eine schematische Darstellung eines kompletten erfindungsgemäßen Antriebs gemäß einem ersten Ausführungsbeispiel. Der Antrieb hat einen als Elektrozylinder ausgebildeten Verstellantrieb 44, von dem in einem Normalbetrieb des Antriebs über eine Kopplungseinrichtung 46 ein Ventilkörper 2 eines Sitzventils (in Figur 1) nach rechts in einer Schließrichtung oder (in Figur 1) nach links in einer Öffnungsrichtung bewegt werden kann.

Figur 1 zeigt das Sitzventil 1, 2 in einer geöffneten Stellung, von der aus sein Ventilkörper 2 in Schließrichtung auf den Ventilsitz 1 des Sitzventils gepresst werden kann.

Weiterhin hat der Antrieb eine hydraulische Anordnung 48, über die insbesondere von einem Normalbetrieb in einen Notbetrieb des erfindungsgemäßen Antriebs umgeschaltet werden kann. Beim Normalbetrieb wird der Ventilkörper 2 über den Verstellantrieb 44 und beim Notbetrieb ersatzweise über eine in der Kopplungseinrichtung 46 integrierten Notfeder 6 bewegt.

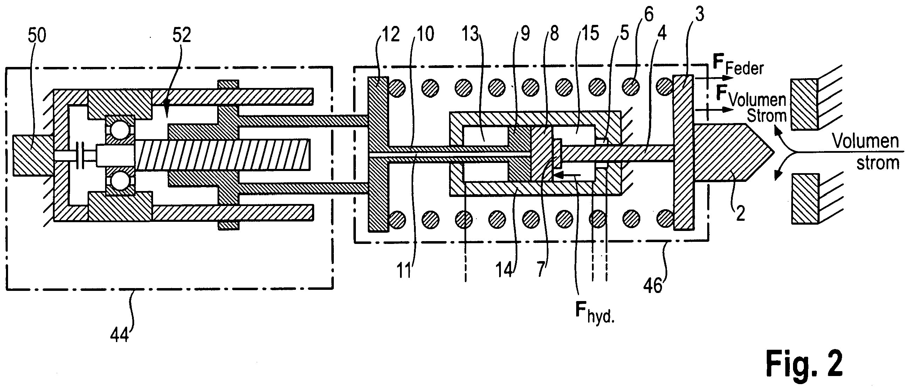

Figur 2 zeigt den Verstellantrieb 44 und die Kopplungseinrichtung 46 des ersten Ausführungsbeispiels gemäß Figur 1. Der Verstellantrieb 44 hat einen Elektromotor 50, der über einen Spindeltrieb 52 eine antriebseitige Federanlage 12 translatorisch bewegt.

Die Kopplungseinrichtung 46 hat einen ortsfesten Zylinder 14, der bei einer Verstellung der Ventilkörpers 2 weder im Normalbetrieb noch im Notbetrieb mitbewegt wird. Darin sind zwei aneinander anliegende Kolben 8, 9 aufgenommen, die jeweils eine Kolbenstange 4, 10 haben. Antriebseitig verbindet die Kolbenstange 10 den Kolben 9 mit der Federanlage 12, während abtriebseitig die Kolbenstange 4 den Kolben 8 mit einer Federanlage 3 verbindet. Zwischen den beiden Federanlagen 3, 12 ist die Notfeder 6 eingespannt.

Der Druck in Ringräumen 13, 15 presst die Kolben 8, 9 mit einer Kraft aufeinander, die größer ist als die Summe einer Federvorspannkraft der Notfeder 6 und der größten Betriebskraft, die durch den Volumenstrom auf den Ventilkörper 2 wirkt. Dadurch ist sicher gestellt, dass beide Kolben 8, 9 stets aufeinander liegen und die Kraft des Verstellantriebes 44 auf den Ventilkörper 2 wirkt. Die Kraft des Verstellantriebes 44 wirkt auf die antriebseitige Federanlage 12 und bewegt, so die Feder 6, die beiden Kolbenstangen 4, 10, die beiden Kolben 8, 9 und schließlich den Ventilkörper 2. Dadurch wird der Abstand zwischen Ventilkörper 2 und Ventilsitz 1 im Normalbetrieb eingestellt und so der Volumenstrom geregelt. Dabei verändern sich die Volumina der beiden Ringräume 13, 15.

Beim erfindungsgemäßen Antrieb wird eine Notfeder 6 im Normalbetrieb durch den Druck in den Ringräumen 13,15 zwischen Federanlagen 3, 12 gespannt gehalten. Im Notbetrieb wird der abtriebseitige Ringraum 15 geöffnet. Die Notfeder 6 bewegt dann den Ventilkörper 2 auf den Ventilsitz 1 und schließt so das Sitzventil 1, 2. Im Notbetrieb bewegen sich insbesondere die sich entspannende Notfeder 6, die abtriebseitige Federanlage 3 und der Ventilkörper 2, wobei die Federanlage 3 über die abtriebseitige Kolbenstange 4 den abtriebseitigen Kolben 8 mitnimmt. Die Bewegung dieser Teile in Schließrichtung dauert so lange an, bis der Ventilkörper 2 auf dem Ventilsitz 1 aufsetzt und so den Volumenstrom unterbricht.

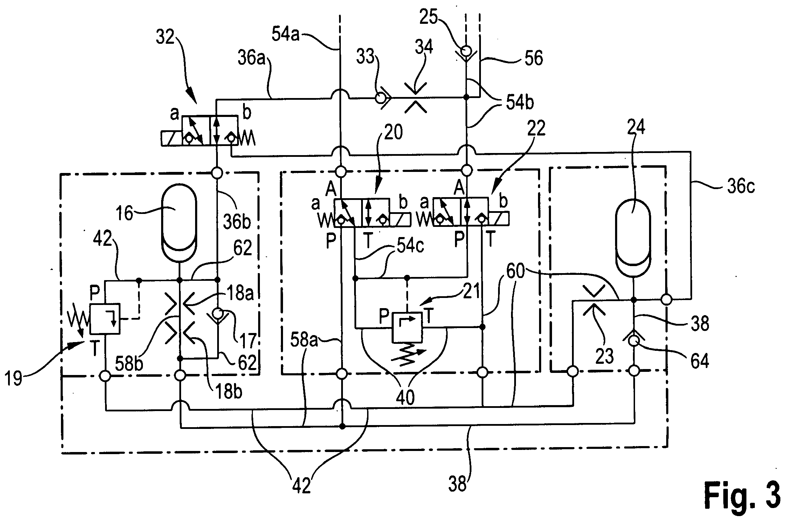

Figur 3 zeigt die hydraulische Anordnung 48 des ersten Ausführungsbeispiels gemäß Figur 1. Sie hat eine Kopplungsleitung zur Verbindung der beiden Ringräume 13, 15 (vgl. Figur 2), die aus einem antriebseitigen Abschnitt 54a, einem abtriebseitigen Abschnitt 54b und einem mittleren Abschnitt 54c besteht. Im abtriebseitigen Abschnitt 54b ist ein Rückschlagventil 25 angeordnet, das in Richtung zum abtriebseitigen Ringraum 15 öffnet, wobei parallel dazu eine Bypassleitung 56 vorgesehen ist, die einen Dämpfungsraum 5 des abtriebseitigen Ringraums 15 (vgl. Figur 2) mit dem abtriebseitigen Abschnitt 54b verbindet.

Zwischen dem antriebseitigen Abschnitt 54a und dem mittleren Abschnitt 54c der Kopplungsleitung ist ein antriebseitiges 3/2-Wegesitzventil 20 vorgesehen, während zwischen dem abtriebseitigen Abschnitt 54b und dem mittleren Abschnitt 54c ein dem entsprechendes abtriebseitiges 3/2-Wegesitzventil 22 vorgesehen ist. Das antriebseitige 3/2-Wegesitzventil 20 verbindet in einer durch eine Feder vorgespannten Grundstellung a die beiden Abschnitte 54a, 54c der Kopplungsleitung, während es in einer bestromten Schaltstellung b den antriebseitigen Abschnitt 54a über eine Hochdruckleitung 58a, 58b mit einem Hochdruckspeicher 16 verbindet. Das abtriebseitige 3/2-Wegesitzventil 22 verbindet in einer Schaltstellung b die beiden Abschnitte der Kopplungsleitung 54b, 54c, während es in einer durch eine Feder vorgespannten Grundstellung a den abtriebseitigen Abschnitt 54b der Kopplungsleitung über eine Niederdruckleitung 60 mit einem Tank oder Niederdruckspeicher 24 verbindet.

In einem Abschnitt 58b der Hochdruckleitung sind zwei Blenden 18a, 18b angeordnet, wobei parallel zu den Blenden 18a, 18b eine Bypassleitung 62 mit einem zum Hochdruckspeicher öffnenden Rückschlagventil 17 angeordnet ist.

In der Niederdruckleitung 60 ist eine Blende 23 vorgesehen.

Der mittlere Abschnitt 54c der Kopplungsleitung ist über eine Entlastungsleitung 40 mit der Niederdruckleitung 60 verbunden, wobei in der Entlastungsleitung 40 ein Druckbegrenzungsventil 21 vorgesehen ist. Zwischen dem Abschnitt 58b der Hochdruckleitung und der Niederdruckleitung 60 ist eine Entlastungsleitung 42 vorgesehen, in der ein Druckbegrenzungsventil 19 angeordnet ist.

Zwischen der Niederdruckleitung 60 und dem Abschnitt 58a der Hochdruckleitung ist eine Nachsaugleitung 38 vorgesehen, in der ein von der Niederdruckleitung 60 zur Hochdruckleitung 58a öffnendes Rückschlagventil 64 angeordnet ist.

Der abtriebseitige Abschnitt 54b der Kopplungsleitung ist über eine Leitung 36a mit einem 3/2-Wegesitzventil 32 verbunden, das in einer durch eine Feder vorgespannten Grundstellung b die Leitung 36a über eine Leitung 36b mit der Bypassleitung 62 verbindet, während es in einer Schaltstellung a die Leitung 36a über eine Leitung 36c mit der Niederdruckleitung 60 verbindet.

Im Folgenden wird eine Erhöhung der hydraulischen Vorspannung mit Bezug zu Figur 3 erläutert: Sinkt der Druck in den Ringräumen 13, 15 durch Leckage oder Temperatureinfluss so weit ab, dass das zuvor beschriebene Aufeinanderpressen der Kolben 8, 9 gefährdet wird, so muss der Druck in den Ringräumen 13, 15 erhöht werden. Zu diesem Zweck wird das 3/2-Wegesitzventil 20 in seine Schaltstellung b geschaltet. Dadurch wird der Ringraum 13 mit dem Druck des Hochdruckspeichers 16 beaufschlagt und auf dessen Druckniveau erhöht. Wird das 3/2-Wegesitzventil 20 in die Grundstellung a zurück geschaltet und die beiden Ringräume 13, 15 verbunden, so bildet sich ein Mitteldruck aus deren Drücken in den beiden Ringräume 13, 15. Ist dieser nicht ausreichend, so wird das 3/2-Wegesitzventil 20 so lange hin- und hergeschaltet bis der Mitteldruck hoch genug ist.

Im Folgenden wird ein Aufpumpen des Hochdruckspeichers 16 erläutert: Sinkt der Hydraulikdruck des Hochdruckspeichers 16 durch Leckagen oder Temperatureinfluss auf einen Wert, der die vorbeschriebene Erhöhung der hydraulischen Vorspannung nicht mehr zulässt, so muss der Druck im Hochdruckspeicher 16 erhöht werden. Zu diesem Zweck wird das 3/2-Wegesitzventil 20 in die Schaltstellung b geschaltet und so der Hochdruckspeicher 16 mit dem antriebseitigen Ringraum 13 verbunden. Dann wird der Kolben 9 durch die Kraft der Verstellantriebes 44 SO bewegt, dass der Ringraum 13 verkleinert wird. Dadurch pumpt der Kolben 9 Druckmittel vom Ringraum 13 in den Hochdruckspeicher 16 und erhöht so dessen Druck.

Bei dieser Bewegung strömt gleichzeitig Luft durch die Bohrung bzw. den Belüftungskanal 11 in den sich zwischen den Kolben 8, 9 bildenden Raum. Der Druck sinkt in Ringraum 15 weil, nachdem der Kolben 9 keine Kraft mehr auf Kolben 8 ausübt, der Druck in Ringraum 15 dann eine Funktion der Federvorspannkraft der Notfeder 6 und der vom Volumenstrom auf den Ventilkörper 2 ausgeübten Betriebskraft ist. Die Federkraft ist immer größer als die Betriebskraft.

Anschließend wird der Kolben 9 von der Kraft des Verstellantriebes schnell in seine Ausgangslage zurückbewegt (in Figur 2 nach rechts) und somit der Ringraum 13 wieder vergrößert. Bei diesem Vorgang strömt viel Druckmittel vom Niederdruckspeicher 24 über die Nachsaugleitung 38 in den Ringraum 13. Gleichzeitig strömt dorthin auch Druckmittel vom Hochdruckspeicher 16. Diese Menge ist jedoch klein, da deren Fluss durch die beiden Blenden 18a, 18b gehindert wird, so dass das Druckniveau im Hochdruckspeicher 16 kaum sinkt. Unmittelbar danach breitet sich der Druck des Hochdruckspeichers 16 im Ringraum 13 aus. Der Pumpvorgang kann nun wiederholt werden. Wenn das Druckniveau hoch genug ist, wird durch Schalten des 3/2-Wegesitzventils 20 in Schaltstellung a in den Normalbetrieb zurückgekehrt.

Wenn während des Normalbetriebs die Pumpbewegung erfolgen soll, wird der Kolben 9 vom Kolben 8 weg bewegt. Dadurch sinkt der Druck im abtriebseitigen Ringraum 15 auf einen Wert, der sich aus der Kraft der Notfeder 6 und der Kraft des Volumenstroms ergibt. Der Ausgangsdruck in den Ringräumen 13, 15 ist mindestens so groß wie der Druck aus der größten Volumenstromkraft plus der aus der größten Federkraft plus Sicherheitszuschlag. Dies garantiert, dass die beiden Kolben 8, 9 auch bei größter Volumenstromkraft immer auf einander gepresst bleiben. Der abgesenkte Druck im abtriebseitigen Ringraum 15 geht mit einer Vergrößerung des Druckmittelvolumens im Ringraum 15 einher und hat zur Folge, dass sich der Kolben 8 in Öffnungsrichtung verschiebt. Das Druckmittel im Ringraum 15 wirkt wie eine Feder.

Um diese Bewegung in Öffnungsrichtung zu verhindern sind die Leitungen 36a bis c, die Ventile 32, 33 und die Blende 34 vorgesehen.

Das 3/2-Wegesitzventil 32 in seiner Schaltstellung b hat keinen Einfluss auf die in der Beschreibung dargelegten Funktionen, da der Hochdruckspeicher 16 durch das Rückschlagventil 33 separiert ist. Im Hochdruckspeicher 16 ist der Druck immer höher als im übrigen Hydrauliksystem, das Rückschlagventil 33 bleibt so geschlossen. Der Niederdruckspeicher 24 ist durch die Schließfunktion b des 3/2-Wegesitzventils 32 separiert.

Damit während der Pumpfunktion die oben beschriebene Verschiebung des Kolbens 8 nicht erfolgt, wird der Druck in Ringraum 15 so weit abgesenkt, dass seine Kraftwirkung $F_{hyd.}$ auf den Kolben 8 so ist, dass er die anderen Kräfte aufhebt.

$$F_{Feder} + F_{Volumenstrom} = F_{hyd.}$$

Erst dann wird der Pumpvorgang begonnen. Die Lage des Kolbens 8 ändert sich dann nicht.

Zu diesem Zweck wird der Kolben 9 vom Elektromotor 50 in seiner Position gehalten und das 3/2-Wegesitzventil 32 in seine Schaltstellung a geschaltet. In dem Druckmittel vom Ringraum 15 über Blende 34, Rückschlagventil 33, 3/2-Wegesitzventil 32 zum Niederdruckspeicher 24 fließt, baut sich der Druck im Ringraum 15 ab. Dies wird solange fortgesetzt bis der vorbestimmte Druck im Ringraum 15 herrscht. Seine Größe wird durch die bekannte Federkraft $F_{Feder}$ und die Kraft aus der Volumenstromwirkung $F_{Volumenstrom}$ vorgegeben. Die Kraft $F_{Volumenstrom}$ ist proportional dem Drehmoment am Elektromotor 50 und kann so bestimmt werden.

Dann wird das 3/2-Wegesitzventil 32 in seine Schaltstellung b zurückgeschaltet und der Pumpvorgang kann beginnen ohne das Kolben 8 sich bewegt.

Bei einer Teilhubprüfung wird während des Betriebs und weitgehend ohne diesen zu beeinträchtigen die Notfunktionsfähigkeit des Antriebs überprüft. Dabei wird festgestellt, ob die Notfeder 6 den Kolben 8 in Schließrichtung bewegen kann. Diese Bewegung soll - um den Betrieb nicht zu beeinträchtigen - nur gering sein.

Zu diesem Zweck wird die oben beschriebene Druckabsenkung mittels des 3/2-Wegesitzventils 32 über den vorbestimmten Druck hinaus fortgesetzt, so überwiegt die Federkraft / Volumenstromkraft, und der Kolben 8 wird wegen der Blende 34 langsam in Schließrichtung bewegt. Der Vorgang wird beendet, in dem das Ventil 32 wieder in seine Schaltstellung b gebracht wird. Die Ausgangslage des Kolbens 8 und der Ausgangsdruck in den Ringräumen 13, 15 wird durch hin- und herschalten des 3/2-Wegesitzventils 20 erreicht. Dabei verteilt sich der Druck des Hochdruckspeichers 16 auf die Ringräume 13, 15.

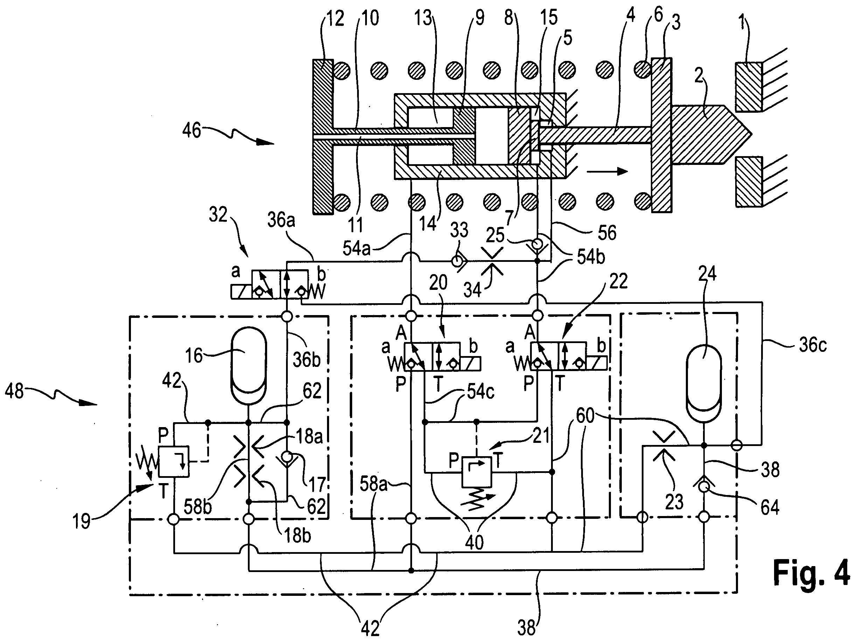

Figur 4 zeigt die Kopplungseinrichtung 46 und die hydraulische Anordnung 48 des ersten Ausführungsbeispiels des erfindungsgemäßen Antriebs in der Notfunktion. Diese wird durch schalten des abtriebseitigen 3/2-Wegesitzventils 22 in seine durch die Feder vorgespannte Schaltstellung a ausgelöst. Der abtriebseitigen Ringraum 15 wird so mit dem Niederdruckspeicher 24 verbunden. Der antriebseitige Ringraum 13 bleibt dabei abgesperrt. Der abtriebseitige Kolben 8 wird von der Notfeder 6 angetrieben und verdrängt Druckmittel von Ringraum 15 über die Blende 23 in den Niederdruckspeicher 24 und bewegt den Ventilkörper 2 in Schließrichtung. Die Geschwindigkeit des Kolbens 8 wird von der Blende 23 begrenzt. Die Notfeder 6 stützt sich bei dieser Notbewegung über die antriebseitige Federanlage 12, die antriebseitige Kolbenstange 10, den antriebseitige Kolben 9 auf dem Druck im abgesperrten antriebseitigen Ringraum 13 ab.

Sobald der Dämpfungszapfen 7 in den dafür vorgesehenen Ringraum 5 eindringt, wird der Ablauf des Druckmittels aus dem Ringraum 15 gedrosselt. Dadurch entsteht im Ringraum 15 ein Druck, der die Bewegung des Kolbens 8 abbremst. Dieser Zustand bzw. Moment ist in Figur 4 gezeigt.

Im Folgenden wird ein Widerherstellen der Betriebsbereitschaft erläutert: Ausgehend von einer geschlossenen Position des Sitzventils 1, 2 wird das antriebseitige 3/2-Wegesitzventil 20 in die Schaltstellung b geschaltet und daraufhin der Kolben 9 durch eine schnelle Bewegung vom Verstellantrieb 44 auf den Kolben 8 gedrückt. Durch die schnelle Bewegung strömt Druckmittel vom Niederdruckspeicher 24 und vom Hochdruckspeicher 16 in den Ringraum 13. Die größere Menge kommt dabei vom Niederdruckspeicher 24, da die Menge, die vom Hochdruckspeicher 16 zuströmt, von den beiden Blenden 18a, 18b gedrosselt ist. Unmittelbar danach breitet sich der Druck des Hochdruckspeichers 16 im antriebseitigen Ringraum 13 aus.

Das abtriebseitige 3/2-Wegesitzventil 22 wird in Schaltstellung b geschaltet, während antriebseitige 3/2-Wegesitzventil 20 so lange zwischen seinen Schaltstellungen hin- und hergeschaltet wird, bis sich der Druck des Hochdruckspeichers 16 in beiden Ringräumen 13, 15 ausgebreitet hat. Das antriebseitige 3/2-Wegesitzventil 20 verbleibt danach in Schaltstellung a, und die Betriebsbereitschaft für Normalfunktion und Notfunktion ist wieder hergestellt.

Da das Druckmittelvolumen geschlossen ist und sich bei Temperaturerhöhung stärker als das es umgebende Metall dehnt, entsteht Druck. Die Höhe des Druckes wird durch das Druckbegrenzungsventil 21 begrenzt, das bei erreichen seines Einstelldrucks die Ringräume 13, 15 mit dem Niederdruckspeicher 24 verbindet.

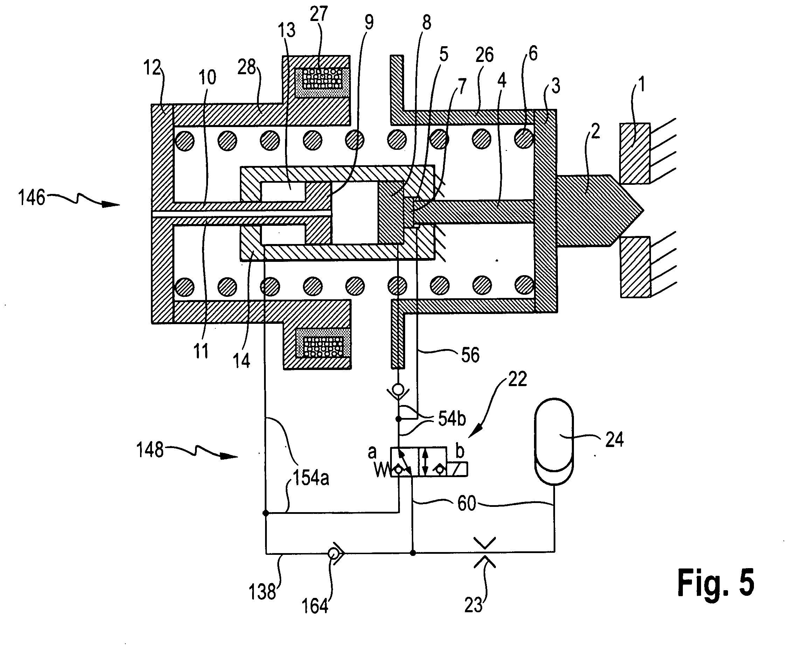

Figur 5 zeigt eine Kopplungseinrichtung 146 mit hydraulischer und magnetischer Sperrvorrichtung und eine hydraulische Anordnung 148 eines zweiten Ausführungsbeispiels des erfindungsgemäßen Antriebs. Die Kopplungseinrichtung 146 ist gegenüber der Kopplungseinrichtung 46 um zwei über einen Elektromagneten verbindbare Abstandsteile 26, 28 ergänzt. Der Elektromagnet hat eine Spule 27. Das Abstandsteil 28 ist an der Federanlage 12 und das Abstandsteil 26 an der Federanlage 3 befestigt. Wenn die Notfeder 6 von der Kraft des Verstellantriebes 44 gespannt ist und sich die beiden Abstandsteile 26, 28 berühren, wird die Spule 27 des Elektromagneten bestromt. Die dadurch entstehende Magnetkraft ist größer als die Federvorspannkraft der Notfeder 6 und presst die Abstandsteile 26, 28 aneinander. Die Notfeder 6 bleibt durch die Magnetkraft gespannt. Beide Sperrvorrichtungen -magnetisch und hydraulisch- wirken parallel und sind redundant.

Die hydraulische Anordnung 148 hat eine Kopplungsleitung 154a, 54b mit dem abtriebseitigen 3/2-Wegesitzventil 22, an das über die Niederdruckleitung 60 der Niederdruckspeicher 24 angeschlossen ist. Die Niederdruckleitung 60 ist über eine Nachsaugleitung 138 mit dem antriebseitigen Abschnitt 154a der Kopplungsleitung verbunden. In der Nachsaugleitung ist ein zur Kopplungsleitung 154a öffnendes Rückschlagventil 164 angeordnet.

Die Notfunktion wird durch das Nichtbestromen des Elektromagneten 27 und des 3/2-Wegesitzventils 22 ausgelöst, wodurch dieser seine Kraftwirkung verliert und jenes in die Schaltstellung a geschaltet wird. Die darauffolgende Schließbewegung des Kolbens ist in seiner Geschwindigkeit durch die Blende 23 begrenzt und wird gebremst durch die Endlagendämpfung 5 und 7. Der antriebseitige Kolben 9 behält während der Notbewegung seine Position. Im antriebseitigen Ringraum 13 baut sich Druck gemäß der Federkraft der Notfeder 6 auf.

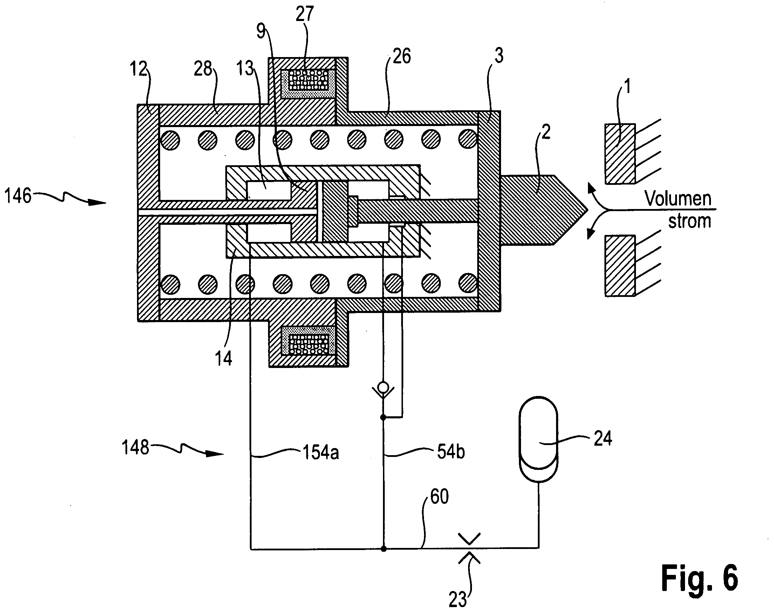

Figur 6 zeigt die Kopplungseinrichtung 146 gemäß Figur 5 mit nur magnetischer Sperrvorrichtung und eine hydraulische Anordnung eines dritten Ausführungsbeispiels des erfindungsgemäßen Antriebs. Beide Ringräume 13, 15 sind mit Druck aus dem Niederdruckspeicher 24 beaufschlagt.

Nach Auslösen der Notfunktion durch stromlos Schalten der Spule 27 streben beide Kolben 8, 9 auseinander. Die Endstellung ist dann erreicht, wenn der Kolben 9 das Gehäuse des ortsfesten Zylinders 14 berührt und der Ventilkörper 2 den Ventilsitz 1 berührt.

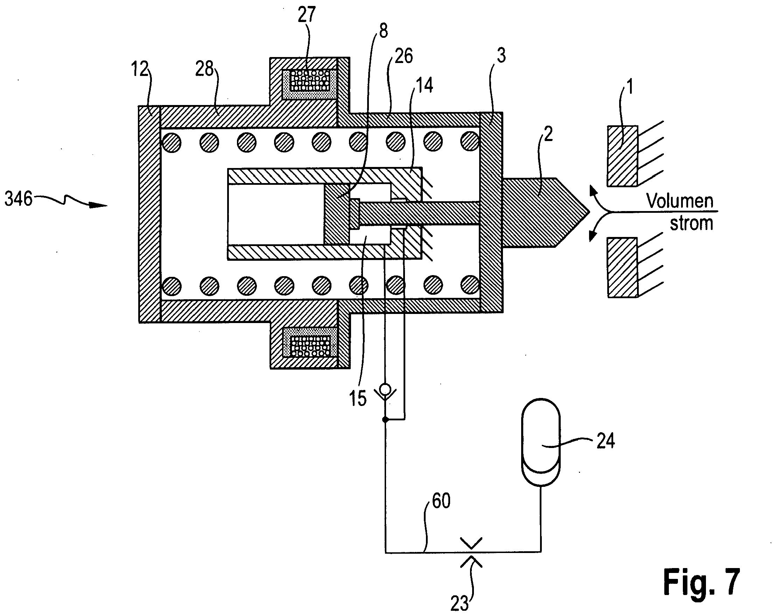

Figur 7 zeigt eine Kopplungseinrichtung 346 mit nur magnetischer Sperrvorrichtung und eine hydraulische Anordnung eines vierten einfachen Ausführungsbeispiels des erfindungsgemäßen Antriebs. Bei diesem Ausführungsbeispiel entfallen der antriebseitige Kolben mit der antriebseitigen Kolbenstange und die Kopplungsleitung.

Abweichend vom zweiten Ausführungsbeispiel gemäß Figur 5 kann die dort gezeigte hydraulische Anordnung 138 auch durch die in Figur 3 gezeigte hydraulische Anordnung 38 des ersten Ausführungsbeispiels ersetzt werden.

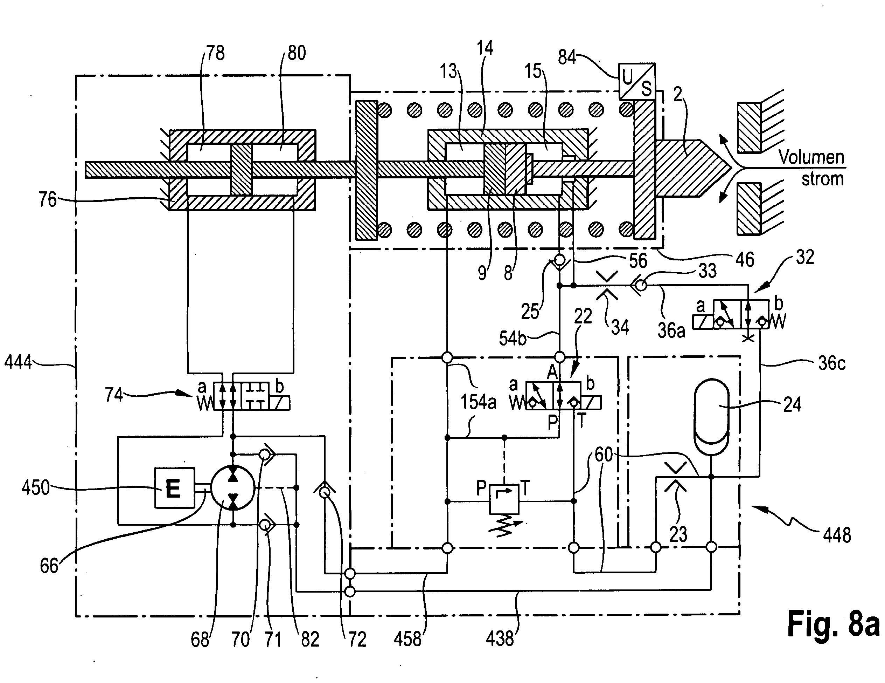

Figuren 8a bis 8d zeigen ein fünftes Ausführungsbeispiel eines erfindungsgemäßen Antriebs, dessen Verstellantrieb 444 ein hydraulischer oder pneumatischer Direktantrieb (statt eines elektromechanischen Spindeltriebs 52) ist. Weiterhin sind die Kopplungseinrichtung 46 und eine hydraulische Anordnung 448 mit hydraulischer Sperrvorrichtung gezeigt.

Der Verstellantrieb 444 besteht aus einem Elektromotor 450, einer Kupplung 66, einer als Pumpe und als Motor betreibbaren Maschine 68, drei Rückschlagventilen 70, 71, 72, einem 4/2-Wegeventil 74 sowie einem Hydraulik-/Pneumatikzylinder 76.

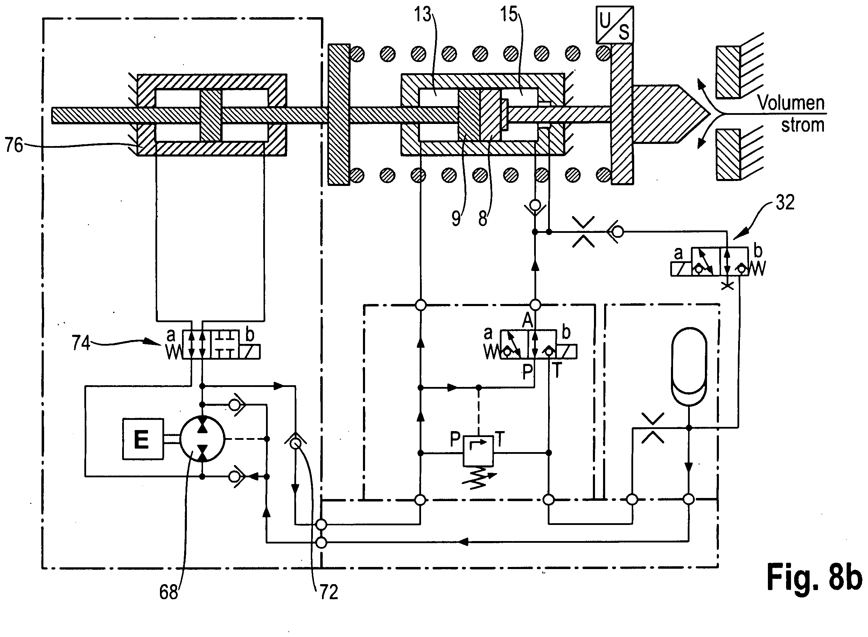

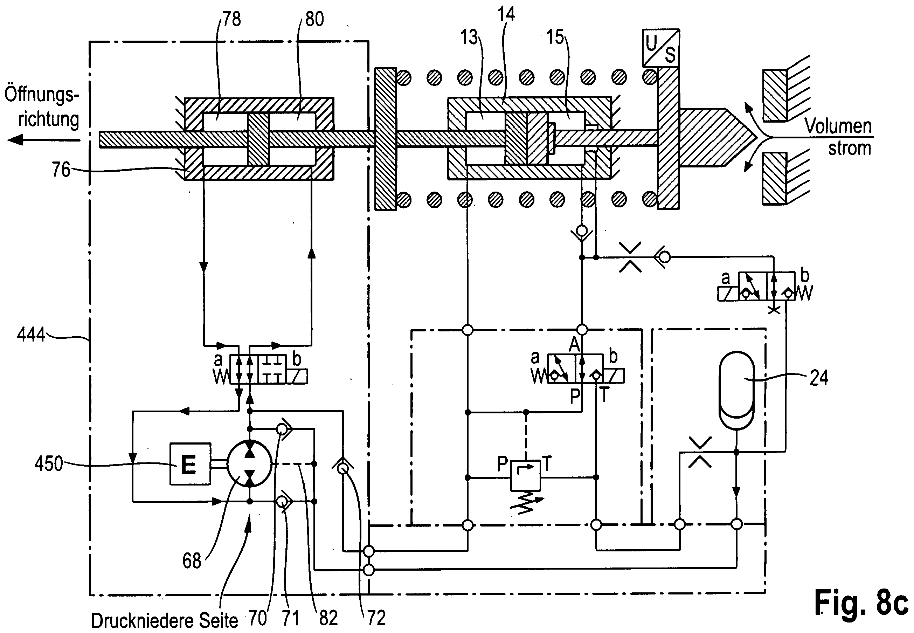

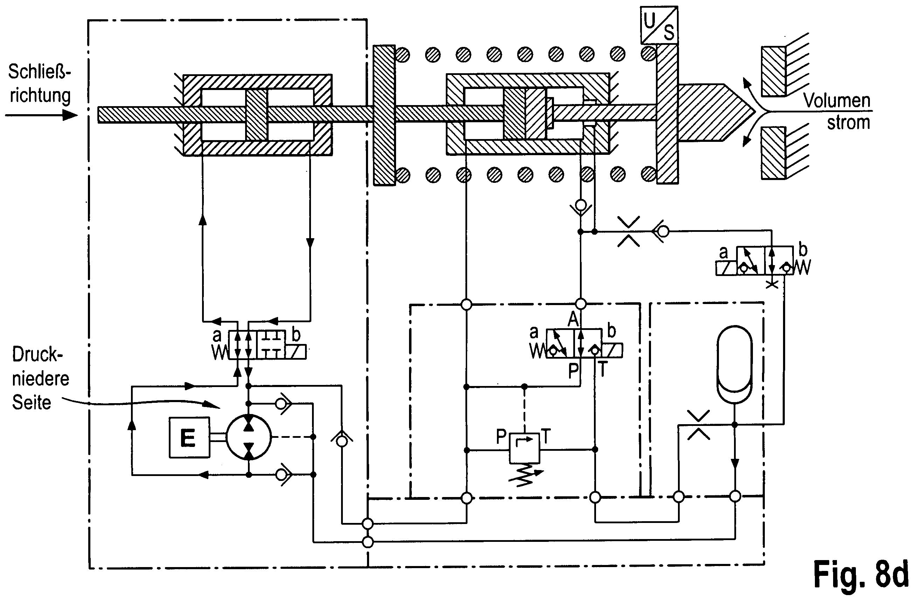

Figur 8b zeigt die Pumpfunktion und Figuren 8c, und 8d die Öffnungs- und Schließbewegung dieses Antriebs.

Kavitation an der jeweiligen Niederdruckseite der Maschine 68 wird durch die Rückschlagventile 70, 71 vermieden, die den Niederdruckspeicher 24 zu der jeweils druckniederen Seite verbinden. Die Leckage der Maschine 68 wird über eine Leckageleitung 82 zum Niederdruckspeicher 24 geleitet.

Voraussetzung für die Funktion ist, dass der Druck in den Ringräumen 13, 15 des Zylinders 14 während des Betriebs stets größer ist, als der Druck in Ringräumen 78, 80 des Zylinders 76, da so das Rückschlagventil 72 den Verstellantrieb 444 hydraulisch von den Ringräumen 13, 15 des Zylinders 14 trennt. Die Trennung wird nur während des Pumpvorgangs aufgehoben.

Der Antrieb gemäß dem fünften Ausführungsbeispiel reduziert den Bauaufwand, da neben diversen Leitungen die Positionen16, 17 18a, 18b, 19, 20, 64 des ersten Ausführungsbeispiels (vgl. Figur 3) entfallen. Weiterhin erhöht dieser Antrieb die Zuverlässigkeit gegenüber dem in den Figuren 1 und 2 gezeigten als Spindeltrieb ausgebildeten Verstellantrieb 44, da die dort notwendige Verdrehsicherung und Schmierung der Mutter sowie die Wälzlagerung der Spindel entfallen können. Ferner kann durch geeignete Auswahl der Größe der Zylinderflächen des Zylinders 76 der Elektromotor 450 und die daran gekuppelte Maschine 68 ideal auf die auszuführende Bewegung abgestimmt werden. Damit ist ein gegenüber den vorgeschriebenen Ausführungsbeispielen verkleinerter Elektromotor 450 möglich. Eine weitere Vereinfachung ergibt sich dadurch, dass die Pumpfunktion der Maschine 68 immanent ist. Die als Pumpe betriebene Maschine 68 kann im Zusammenwirken mit dem 4/2-Wegeventil 74 und dem Rückschlagventil 72 den Druck in den Ringräumen 13, 15 erhöhen (Figur 8b). Die Pumpfunktion des Kolbens 9, der Hochdruckspeicher 16 und das diesen mit dem Ringraum 13 verbindende antriebsseitige 3/2-Wegesitzventil 20 entfallen daher.

Während des Pumpvorgangs wird die Berührung der beiden Kolben 8, 9 nicht aufgehoben und sie bewegen sich nicht. Zylinder 76 ist durch das in Schaltstellung b geschaltete 4/2-Wegeventil 74 blockiert. Somit ist eine Druckreduzierung in den Ringräumen 13, 15 durch das 3/2-Wegesitzventil 32, die Leitungen 36a bis c, das Rückschlagventil 33 und die Blende 34 nicht erforderlich, so dass diese Prozedur unterbleiben kann und die entsprechenden Positionen entfallen können (vgl. Figuren 3 und 4).

Der Antrieb gemäß den Figuren 8a bis 8d benötigt zusätzlich eine Wegmesseinrichtung 84, um die Position des Ventilkörpers 2 gegen den ortsfesten Zylinder 14 mit Hilfe des Elektromotors 450 zu regeln. Die Position der Mutter des Spindeltriebs 52 gemäß den vorbeschriebenen Ausführungsbeispielen ist eine exakte Funktion des Drehwinkels des Elektromotors 50, der Spindeltrieb 52 benötigt daher keine Wegmesseinrichtung. Für den hydraulischen Direktantrieb gemäß dem fünften Ausführungsbeispiel gilt auf Grund des volumetrischen Wirkungsgrads der als Pumpe betriebenen Maschine 68 diese exakte Proportionalität nicht.

Die in den Figuren 1 bis 8 dargestellte Vorrichtung zur Geschwindigkeitsbegrenzung (Blende 23) und die hydraulische Endlagendämpfung 5, 7 kann alternativ auch elektrisch, magnetorheologisch oder pneumatisch sein bzw. erfolgen.

Ein weiteres nicht gezeigtes Ausführungsbeispiel des erfindungsgemäßen Antriebs betrifft ein Butterflyventil. Gemäß dem Stand der Technik verschwenkt dabei ein Antrieb mit Notfunktion über eine drehbare Welle eine an ihr befestigte Schließplatte öffnend oder schließend. Ein Verstellantrieb und eine Notfeder wirken auf eine Schubstange mit Zapfen. Dieser Zapfen ist in einem Langloch eines Hebels aufgenommen, an dem die Welle befestigt ist. Eine Längsbewegung der Schubstange führt so über den Zapfen und das Langloch zu einer Schwenkbewegung des Hebels und zu einer Drehbewegung der Welle, wodurch die an ihr befestigte Schließplatte des Butterflyventils öffnet oder schließt. Dabei wird stets die Notfeder gespannt oder entspannt.

Der erfindungsgemäße Antrieb für ein Butterflyventil beruht auf dem gleichen Prinzip wie mit Bezug zu den Figuren 1 bis 4 und 8 beschreiben. Allerdings wird anders als bei den gezeigten Ausführungsbeispielen bei diesem (nicht gezeigten) erfindungsgemäßen Antrieb für ein Butterflyventil die Kraft des Verstellantriebes nicht einseitig über die antriebsseitige Federanlage in den antriebsseitigen Kolben eingeleitet, sondern über eine vergleichsweise lange Stange durch den Schwenkantrieb hindurch auf dessen gegenüber liegende Seite. Die lange Stange durchdringt dabei die Schubstange des Schwenkantriebs, die abtriebsseitige Kolbenstange, den abtriebsseitigen Kolben, die abtriebsseitige Federanlage sowie einen Teil der Notfeder.

Offenbart ist ein Antrieb mit Notschließfunktion mit einer beweglichen Kopplungseinrichtung, die eine zwischen einer antriebsseitigen und einer abtriebsseitigen Federanlage eingespannte Notfeder aufweist. Vorzugsweise ist die Notfeder eine mit der Kopplungseinrichtung mitbewegte Druckfeder. Ein Abstand der Federanlagen ist in einem Normalbetrieb des Antriebs über eine Sperrvorrichtung festgelegt, wobei sich die Notfeder nach einem Lösen oder Entsperren der Sperrvorrichtung für eine Notfunktion oder Notbewegung des Antriebs entspannen kann. Dabei ist die Sperrvorrichtung erfindungsgemäß hydraulisch oder pneumatisch und/oder magnetisch betätigt bzw. auslösbar.

Bezugszeichenliste

| 1 | Ventilsitz |
|---|---|
| 2 | Ventilkörper |
| 3 | abtriebseitige Federanlage |
| 4 | abtriebseitige Kolbenstange |
| 5 | Dämpfungsraum |
| 6 | Notfeder |
| 7 | Dämpfungszapfen |
| 8 | abtriebseitiger Kolben |
| 9 | antriebseitiger Kolben |
| 10 | antriebseitige Kolbenstange |
| 11 | Belüftungskanal |
| 12 | antriebseitige Federanlage |
| 13 | antriebseitiger Ringraum |
| 14 | Zylinder |
| 15 | abtriebseitiger Ringraum |
| 16 | Hochdruckspeicher |
| 17 | Rückschlagventil |
| 18a, 18b | Blende |
| 19, 21 | Druckbegrenzungsventil |
| 20 | antriebseitiges 3/2-Wegesitzventil |
| 22 | abtriebseitiges 3/2-Wegesitzventil |
| 23 | Blende |
| 24 | Niederdruckspeicher/Tank |
| 25 | Rückschlagventil |
| 26, 28 | Abstandsteil |
| 27 | Spule |
| 32 | 3/2-Wegesitzventil |
| 33 | Rückschlagventil |
| 34 | Blende |
| 36a, 36b, 36c | Leitung |
| 38; 138 | Nachsaugleitung |
| 40 | Entlastungsleitung |
| 42 | Entlastungsleitung |
| 44; 444 | Verstellantrieb |
| 46; 146; 346 | Kopplungseinrichtung |
| 48; 148; 448 | hydraulische Anordnung |
| 50; 450 | Elektromotor |
| 52 | Spindeltrieb |
| 54a; 154a | antriebseitiger Abschnitt |
| 54b | abtriebseitiger Abschnitt |
| 54c | mittlerer Abschnitt |
| 56 | Bypassleitung |
| 58a, 58b; 458 | Hochdruckleitung |
| 60 | Niederdruckleitung |
| 62 | Bypassleitung |
| 64; 164 | Rückschlagventil |
| 66 | Kupplung |
| 68 | Maschine |
| 70,71,72 | Rückschlagventil |
| 74 | 4/2-Wegeventil |
| 76 | Zylinder |
| 78, 80 | Ringraum |
| 82 | Leckageleitung |
| 84 | Wegmesseinrichtung |

**Patentansprüche**

1. Antrieb mit einer beweglichen Kopplungseinrichtung (46; 146; 346), die eine zwischen einer antriebseitigen Federanlage (12) und einer abtriebseitigen Federanlage (3) eingespannte Notfeder (6) hat, wobei ein Abstand der Federanlagen (3, 12) in einem Normalbetrieb des Antriebs über eine Sperrvorrichtung fixiert ist, und wobei die Notfeder (6) nach Lösen der Sperrvorrichtung für eine Notfunktion des Antriebs entspannbar ist, wobei die Sperrvorrichtung hydraulisch oder pneumatisch und/oder magnetisch ist, **dadurch gekennzeichnet, dass** die Notfeder (6) eine mit der Kopplungseinrichtung (46; 146; 246) mitbewegte Druckfeder ist.

2. Antrieb nach Patentanspruch 1 mit einem Verstellantrieb (44; 444), von dem eine translatorische antriebseitige Bewegung erzeugbar ist, die über die Kopplungseinrichtung (46; 146; 346), in eine translatorische abtriebseitige Bewegung eines Ventilkörpers (2) eines Ventils (1, 2) übertragbar ist, und wobei nach dem Lösen der Sperrvorrichtung von der Notfeder (6) eine abtriebseitige Bewegung des Ventilkörpers (2) in eine Schließrichtung des Ventils (1, 2) erzeugbar ist.

3. Antrieb nach Patentanspruch 1 oder 2, mit einem ortsfesten Zylinder (14), der einen abtriebseitigen Ringraum (15) und einen abtriebseitigen Kolben (8) hat, der über eine abtriebseitige Kolbenstange (4) mit der abtriebseitigen Federanlage (3) verbunden ist.

4. Antrieb nach Patentanspruch 2 oder 3 mit einem Dämpfer (5, 7), der während der Notfunktion am Ende der abtriebseitigen Bewegung in Schließrichtung wirksam ist.

5. Antrieb nach Patentanspruch 4, wobei der Dämpfer ein fluidischer Endlagendämpfer (5, 7) ist.

6. Antrieb nach einem der Patentansprüche 3 bis 5, wobei der Zylinder (14) einen antriebseitiger Kolben (9) hat, der über eine antriebseitige Kolbenstange (10) mit der antriebseitigen Federanlage (12) verbunden ist, wobei die antriebseitige Kolbenstange (10) einen antriebseitigen Ringraum (13) durchsetzt.

7. Antrieb nach Patentanspruch 6, wobei der Verstellantrieb und der antriebseitige Kolben über eine Verbindungsstange gekoppelt sind, die die abtriebseitige Federanlage, die abtriebseitige Kolbenstange und den abtriebseitigen Kolben durchdringt.

8. Antrieb nach einem der Patentansprüche 2 bis 7, wobei das Ventil ein Butterflyventil und der Ventilkörper eine Schließplatte ist, und wobei die Kopplungseinrichtung über einen Schwenkantrieb mit einer Welle der Schließplatte verbunden ist.

9. Antrieb nach Patentanspruch 7 und 8, wobei der Verstellantrieb auf einer ersten Seite der Welle oder des Butterflyventils angeordnet ist, und wobei die Notfeder auf einer der ersten Seite gegenüber liegenden zweiten Seite der Welle oder des Butterflyventils angeordnet ist.

10. Antrieb nach einem der Patentansprüche 6 bis 9, wobei die beiden Kolben (8, 9) zwischen den beiden Ringräumen (13, 15) angeordnet sind, und wobei die beiden Ringräume (13, 15) über eine Kopplungsleitung (54a, 54b, 54c; 154a) hydraulisch koppelbar sind.

11. Antrieb nach Patentanspruch 10, wobei die Kopplungsleitung (54a, 54b, 54c; 154a) oder der abtriebseitige Ringraum (15) über eine Niederdruckleitung (60) mit einem Niederdruckspeicher (24) verbindbar oder verbunden ist.

12. Antrieb nach Patentanspruch 11, wobei in der Niederdruckleitung (60) und/oder in der Kopplungsleitung (54b) direkt vor dem abtriebsseitigen 3/2-Wegesitzventil (22) eine Blende (23) angeordnet Ist.

13. Antrieb nach einem der Patentansprüche 6 bis 12, wobei einer der beiden Kolben (8, 9) und die zugeordnete Kolbenstange (4, 10) von einem Belüftungs kanal (11) durchsetzt sind.

14. Antrieb nach einem der Patentansprüche 6 bis 13, wobei eine Anpresskraft zwischen den beiden Kolben (8, 9) größer ist als die Summe aus einer Kraft der Notfeder (6) und einer Kraft, die zur Bewegung des Ventilkörpers (2) nötig ist.

15. Antrieb nach einem der Patentansprüche 11 bis 14, wobei in der Kopplungs leitung (54b, 54c; 154a, 54b) ein abtriebseitiges 3/2-Wegesitzventil (22) angeordnet ist, an das die Niederdruckleitung (60) angeschlossen ist, und wobei bei dessen durch eine Feder vorgespannten Grundstellung der abtriebseitige Ringraum (15) mit dem Niederdruckspeicher (24) verbunden ist.

16. Antrieb nach Patentanspruch 15, wobei ein Dämpfungsraum (5) über eine Bypassleitung (56) an einen Abschnitt der Kopplungsleitung (54b) angeschlossen ist, der das abtriebseitige 3/2-Wegesitzventil (22) und den abtriebseitigen Ring raum (15) verbindet, und wobei in einem Abschnitt der Kopplungsleitung (54b), der den abtriebseitigen Ringraum (15) mit einem Anschluss der Bypassleitung (56) verbindet, ein Rückschlagventil (25) angeordnet ist, das vom abtriebseitigen 3/2-Wegesitzventil (22) zum abtriebseitigen Ringraum (15) öffnet.

17. Antrieb nach einem der vorhergehenden Patentansprüche, wobei der Verstellantrieb (444) hydraulisch oder pneumatisch ist und einen Zylinder (76) hat, dessen Kolbenstange von einer Maschine (68) bewegbar ist, wobei an der Kolbenstange die antriebsseitige Federanlage (12) befestigt ist.

18. Antrieb nach Patentanspruch 17, wobei eine Druckmittelverbindung von der Maschine (68) zum Zylinder (76) absperrbar ist, und wobei die Maschine (68) über eine Hochdruckleitung (458) mit der Kopplungsleitung (154a) und über eine Nachsaugleitung (438) mit dem Niederdruckspeicher (24) verbunden ist.

19. Antrieb nach Patentanspruch 18, wobei die Nachsaugleitung (438) über zwei Verzweigungsleitungen, in denen je ein Rückschlagventil (70, 71) angeordnet ist, mit beiden Arbeitsanschlüssen der Maschine (68) verbunden ist.

20. Antrieb nach einem der Patentansprüche 11 bis 16, wobei die Niederdruck leitung (60) und die Kopplungsleitung (154a) über eine Nachsaugleitung (138) verbunden sind, in der ein von der Niederdruckleitung (60) zur Kopplungs leitung (154a) öffnendes Rückschlagventil (164) angeordnet ist.

21. Antrieb nach einem der Patentansprüche 10 bis 20, wobei in der Kopplungs leitung (54a, 54c) ein antriebseitiges 3/2-Wegesitzventil (20) angeordnet ist, über das der antriebseitige Ringraum (13) über eine Hochdruckleitung (58a, 58b) mit einem Hochdruckspeicher (16) verbindbar ist.

22. Antrieb nach Patentanspruch 21, wobei die Niederdruckleitung (60) und die Hochdruckleitung (58a, 58b) über eine Nachsaugleitung (38) verbunden sind, in der ein von der Niederdruckleitung (60) zur Hochdruckleitung (58a, 58b) öffnendes Rückschlagventil (64) angeordnet ist.

23. Antrieb nach Patentanspruch 22, wobei in der Hochdruckleitung (58a, 58b) zwischen den Hochdruckspeicher (16) und einem Anschluss der Nachsaug leitung (38) zumindest eine Blende (18a, 18b) angeordnet ist, zu der in einer parallelen Bypassleitung (62) ein zum Hochdruckspeicher (16) öffnendes Rückschlagventil (17) angeordnet ist.

24. Antrieb nach einem der Patentansprüche 16 bis 23, wobei ein Abschnitt der Kopplungsleitung (54b), der zwischen dem Rückschlagventil (25) und dem abtriebsseitigen 3/2-Wegesitzventil (22) angeordnet ist, über ein 3/2-Wegesitz ventil (32) mit der Niederdruckleitung (60) oder mit der Hochdruckleitung (58b) verbind bar ist, und wobei in einer den Abschnitt der Kopplungsleitung (54b) mit dem 3/2-Wegesitzventil (32) verbindenden Leitung (36a) eine Blende (34) und ein zum 3/2-Wegesitzventil (32) öffnendes Rückschlagventil (33) angeordnet sind.

25. Antrieb nach einem der vorhergehenden Patentansprüche, mit einem Trag- oder Befestigungselement, das als Hydraulikblock ausbildet ist, an dem oder in dem der oder die Druckspeicher (16,24), die Ventile (17, 20, 22, 25, 32, 33, 64; 70, 71, 72, 74; 164), die Leitungen (36a, 36b, 36c, 38, 54a, 54b, 54c, 56, 58a, 58b, 60, 62; 82; 138, 154; 458) und die Kanäle angeordnet sind.

26. Antrieb nach einem der vorhergehenden Patentansprüche, wobei die magnetische Sperrvorrichtung einen Elektromagneten mit einer Spule (27) und mit einem Anker hat, die jeweils mit einer der Federanlagen (3, 12) verbunden sind.

27. Antrieb nach Patentanspruch 26, wobei die Spule (27) und der Anker jeweils ringförmig angeordnet und jeweils über ein Abstandsteil (26, 28) an der zugeordneten Federanlage (3, 12) befestigt sind, und wobei die Notfeder (6) Im Innern der beiden Abstandsteile (26, 28) angeordnet ist.

28. Antrieb nach Patentanspruch 26 oder 27, wobei die magnetische Sperrvorrichtung einen Permanentmagneten aufweist.

29. Antrieb nach einem der Patentansprüche 2 bis 28, wobei der Verstellantrieb (44) mit der antriebseitigen Federanlage (12) verbunden ist, und/oder wobei der Verstellantrieb (44) elektrisch, hydraulisch oder pneumatisch ist.

30. Antrieb nach einem der Patentansprüche 6 bis 29, wobei zwischen den beiden Kolben (8, 9) ein Dämpfungselement angeordnet ist.

**Claims**

1. Drive having a movable coupling device (46; 146; 346) which has an emergency spring (6) braced between a driving-side spring abutment (12) and a driven-side spring abutment (3), wherein a spacing of the spring abutments (3, 12) in a normal operating mode of the drive is fixed by means of a locking device, and wherein, after a release of the locking device, the emergency spring (6) can relax for an emergency function of the drive, wherein the locking device is hydraulic or pneumatic and/or magnetic, **characterized in that** the emergency spring (6) is a compression spring which is moved jointly with the coupling device (46; 146; 246).

2. Drive according to Patent Claim 1, having an adjustment drive (44; 444) by means of which a translatory driving-side movement can be generated which can be transmitted via the coupling device (46; 146; 346) into a translatory driven-side movement of a valve body (2) of a valve (1, 2), and wherein, after the release of the locking device, a driven-side movement of the valve body (2) in a closing direction of the valve (1, 2) can be generated by the emergency spring (6).

3. Drive according to Patent Claim 1 or 2, having a positionally fixed cylinder (14) which has a driven-side annular chamber (15) and a driven-side piston (8), the latter being connected via a driven-side piston rod (4) to the driven-side spring abutment (3).

4. Drive according to Patent Claim 2 or 3, having a damper (5, 7) which, during the emergency function, acts in the closing direction at the end of the driven-side movement.

5. Drive according to Patent Claim 4, wherein the damper is a fluidic end position damper (5, 7).

6. Drive according to one of Patent Claims 3 to 5, wherein the cylinder (14) has a driving-side piston (9) which is connected via a driving-side piston rod (10) to the driving-side spring abutment (12), wherein the driving-side piston rod (10) extends through a driving-side annular chamber (13).

7. Drive according to Patent Claim 6, wherein the adjustment drive and the driving-side piston are coupled by means of a connecting rod which extends through the driven-side spring abutment, the driven-side piston rod and the driven-side piston.

8. Drive according to one of Patent Claims 2 to 7, wherein the valve is a butterfly valve and the valve body is a closing plate, and wherein the coupling device is connected via a pivot drive to a shaft of the closing plate.

9. Drive according to Patent Claim 7 and 8, wherein the adjustment drive is arranged on a first side of the shaft or of the butterfly valve, and wherein the emergency spring is arranged on a second side, which is situated opposite the first side, of the shaft or of the butterfly valve.

10. Drive according to one of Patent Claims 6 to 9, wherein the two pistons (8, 9) are arranged between the two annular chambers (13, 15), and wherein the two annular chambers (13, 15) can be hydraulically coupled via a coupling line (54a, 54b, 54c; 154a).

11. Drive according to Patent Claim 10, wherein the coupling line (54a, 54b, 54c; 154a) or the driven-side annular chamber (15) is connectable or is connected via a low-pressure line (60) to a low-pressure accumulator (24) .

12. Drive according to Patent Claim 11, wherein an orifice (23) is arranged in the low-pressure line (60) and/or in the coupling line (54b) directly upstream of the driven-side 3/2 directional seat valve (22).

13. Drive according to one of Patent Claims 6 to 12, wherein an aeration duct (11) extends through one of the two pistons (8, 9) and the associated piston rod (4, 10).

14. Drive according to one of Patent Claims 6 to 13, wherein a pressing force between the two pistons (8, 9) is greater than the sum of a force of the emergency spring (6) and a force required for moving the valve body (2).

15. Drive according to one of Patent Claims 11 to 14, wherein in the coupling line (54b, 54c; 154a, 54b) there is arranged a driven-side 3/2 directional seat valve (22) to which the low-pressure line (60) is connected, and wherein, in the spring-biased normal position of said valve, the driven-side annular chamber (15) is connected to the low-pressure accumulator (24).

16. Drive according to Patent Claim 15, wherein a damping chamber (5) is connected via a bypass line (56) to a portion of the coupling line (54b) which connects the driven-side 3/2 directional seat valve (22) and the driven-side annular chamber (15), and wherein a check valve (25) is arranged in a portion of the coupling line (54b) which connects the driven-side annular chamber (15) to a connection of the bypass line (56), which check valve opens from the driven-side 3/2 directional seat valve (22) toward the driven-side annular chamber (15).

17. Drive according to one of the preceding patent claims, wherein the adjustment drive (444) is hydraulic or pneumatic and has a cylinder (76) whose piston rod can be moved by a machine (68), wherein the driving-side spring abutment (12) is fastened to the piston rod.

18. Drive according to Patent Claim 17, wherein a pressure medium connection from the machine (68) to the cylinder (76) can be shut off, and wherein the machine (68) is connected via a high-pressure line (458) to the coupling line (154a) and via a suction line (438) to the low-pressure accumulator (24).

19. Drive according to Patent Claim 18, wherein the suction line (438) is connected via two branch lines, in which in each case one check valve (70, 71) is arranged, to the two working connections of the machine (68) .

20. Drive according to one of Patent Claims 11 to 16, wherein the low-pressure line (60) and the coupling line (154a) are connected via a suction line (138) in which there is arranged a check valve (164) which opens from the low-pressure line (60) toward the coupling line (154a).

21. Drive according to one of Patent Claims 10 to 20, wherein in the coupling line (54a, 54c) there is arranged a driving-side 3/2 directional seat valve (20) by means of which the driving-side annular chamber (13) can be connected via a high-pressure line (58a, 58b) to a high-pressure accumulator (16).

22. Drive according to Patent Claim 21, wherein the low-pressure line (60) and the high-pressure line (58a, 58b) are connected via a suction line (38) in which there is arranged a check valve (64) which opens from the low-pressure line (60) toward the high-pressure line (58a, 58b).

23. Drive according to Patent Claim 22, wherein at least one orifice (18a, 18b) is arranged in the high-pressure line (58a, 58b) between the high-pressure accumulator (16) and a connection of the suction line (38), with a check valve (17) which opens toward the high-pressure accumulator (16) being arranged in a bypass line (62) parallel to said at least one orifice.

24. Drive according to one of Patent Claims 16 to 23, wherein a portion of the coupling line (54b) arranged between the check valve (25) and the driven-side 3/2 directional seat valve (22) can be connected via a 3/2 directional seat valve (32) to the low-pressure line (60) or to the high-pressure line (58b), and wherein in a line (36a) which connects the portion of the coupling line (54b) to the 3/2 directional seat valve (32) there is arranged an orifice (34) and a check valve (33) which opens toward the 3/2 directional seat valve (32).

25. Drive according to one of the preceding patent claims, having a support or fastening element which is in the form of a hydraulic block and on or in which the one or more pressure accumulators (16, 24), the valves (17, 20, 22, 25, 32, 33, 64; 70, 71, 72, 74; 164), the lines (36a, 36b, 36c, 38, 54a, 54b, 54c, 56, 58a, 58b, 60, 62; 82; 138, 154; 458) and the ducts are arranged.

26. Drive according to one of the preceding patent claims, wherein the magnetic locking device has an electromagnet with a coil (27) and with an armature, the coil and the armature being connected to in each case one of the spring abutments (3, 12).

27. Drive according to Patent Claim 26, wherein the coil (27) and the armature are arranged in each case annularly and are fastened in each case via a spacer part (26, 28) to the associated spring abutment (3, 12), and wherein the emergency spring (6) is arranged in the interior of the two spacer parts (26, 28).

28. Drive according to Patent Claim 26 or 27, wherein the magnetic locking device has a permanent magnet.

29. Drive according to one of Patent Claims 2 to 28, wherein the adjustment drive (44) is connected to the driving-side spring abutment (12), and/or wherein the adjustment drive (44) is electric, hydraulic or pneumatic.

30. Drive according to one of Patent Claims 6 to 29, wherein a damping element is arranged between the two pistons (8, 9).

**Revendications**

1. Dispositif d'entraînement, pourvu d'un système d'accouplement (46 ; 146 ; 346) mobile, qui dispose d'un ressort d'urgence (6) enserré entre un système de ressorts (12) du côté entraînement et un système de ressorts (3) du côté sortie, dans un mode normal du dispositif d'entraînement, un écart du système de ressorts (3, 12) étant fixé par l'intermédiaire d'un dispositif de blocage et après desserrage du dispositif de blocage, le ressort d'urgence (6) pouvant être détendu pour une fonction d'urgence du dispositif d'entraînement, le dispositif de blocage étant hydraulique ou pneumatique et/ou magnétique, **caractérisé en ce que** le ressort d'urgence (6) est un ressort de pression, déplacé en concomitance avec le système d'accouplement (46 ; 146 ; 246).

2. Dispositif d'entraînement selon la revendication 1, pourvu d'un entraînement de réglage (44 ; 444), lequel est susceptible de générer un déplacement en translation du côté entraînement, qui par l'intermédiaire du système d'accouplement (46 ; 146 ; 346), est transférable en un déplacement en translation du côté sortie d'un corps de soupape (2) d'une soupape (1, 2) et après le desserrage du dispositif de blocage par le ressort d'urgence (6), un déplacement du côté sortie du corps de soupape (2) pouvant être généré dans une direction de fermeture de la soupape (1, 2).

3. Dispositif d'entraînement selon la revendication 1 ou 2, pourvu d'un cylindre stationnaire (14) qui dispose d'un espace annulaire (15) du côté sortie et d'un piston (8) du côté entraînement, qui par l'intermédiaire d'une tige de piston (4) du côté sortie est relié avec le système de ressorts (3) du côté sortie.

4. Dispositif d'entraînement selon la revendication 2 ou 3, pourvu d'un amortisseur (5, 7), qui pendant la fonction d'urgence est actif à la fin du déplacement du côté sortie, dans la direction de fermeture.

5. Dispositif d'entraînement selon la revendication 4, l'amortisseur étant un amortisseur de fin de course (5, 7) fluidique.

6. Dispositif d'entraînement selon l'une quelconque des revendications 3 à 5, le cylindre (14) disposant d'un piston (9) du côté entraînement, qui par l'intermédiaire d'une tige de piston (10) du côté entraînement est relié avec le système de ressorts (12) du côté entraînement, la tige de piston (10) du côté entraînement traversant un espace annulaire (13) du côté entraînement.

7. Dispositif d'entraînement selon la revendication 6, l'entraînement de réglage et le piston du côté entraînement étant accouplés par l'intermédiaire d'une barre de liaison, qui traverse le système de ressorts du côté sortie, la tige de piston du côté sortie et le piston du côté sortie.

8. Dispositif d'entraînement selon l'une quelconque des revendications 2 à 7, la soupape étant une soupape papillon et le corps de soupape étant une plaque de fermeture et le système d'accouplement étant relié par l'intermédiaire d'un entraînement en pivotement avec un arbre de la plaque de fermeture.

9. Dispositif d'entraînement selon la revendication 7 et 8, l'entraînement de réglage étant placé sur un premier côté de l'arbre ou de la soupape papillon et le ressort d'urgence étant placé sur une deuxième face située en vis-à-vis de la première face de l'arbre ou de la soupape papillon.

10. Dispositif d'entraînement selon l'une quelconque des revendications 6 à 9, les deux pistons (8, 9) étant placés entre les deux espaces annulaires (13, 15) et les deux espaces annulaires (13, 15) pouvant être accouplés hydrauliquement par l'intermédiaire d'un conduit d'accouplement (54a, 54b, 54c ; 154a).

**11.** Dispositif d'entraînement selon la revendication 10, le conduit d'accouplement (54a, 54b, 54c ; 154a) ou l'espace annulaire (15) du côté sortie étant ou pouvant être relié par l'intermédiaire d'un conduit basse pression (60) avec un accumulateur basse pression (24).

**12.** Dispositif d'entraînement selon la revendication 11, dans le conduit basse pression (60) et/ou dans le conduit d'accouplement (54b), directement à l'avant de la soupape à siège à 3/2 voies (22) du côté sortie étant placé un cache (23) .

**13.** Dispositif d'entraînement selon l'une quelconque des revendications 6 à 12, l'un des deux pistons (8, 9) et la tige de piston (4, 10) associée étant traversés par un canal d'aération (11).

**14.** Dispositif d'entraînement selon l'une quelconque des revendications 6 à 13, une force de pression d'appui entre les deux pistons (8, 9) étant supérieure à la somme d'une force du ressort d'urgence (6) et d'une force qui est nécessaire pour le déplacement du corps de soupape (2).

**15.** Dispositif d'entraînement selon l'une quelconque des revendications 11 à 14, dans le conduit d'accouplement (54b, 54c ; 154a, 54b) étant placée une soupape à siège à 3/2 voies (22) du côté sortie, sur laquelle est raccordé le conduit basse pression (60) et dans sa position de base précontrainte par un ressort, l'espace annulaire (15) du côté sortie étant relié avec l'accumulateur basse pression (24).

**16.** Dispositif d'entraînement selon la revendication 15, un espace amortisseur (5) étant raccordé par l'intermédiaire d'un conduit de dérivation (56) sur un tronçon du conduit d'accouplement (54b) qui relie la soupape à siège à 3/2 voies (22) du côté sortie et l'espace annulaire (15) du côté sortie et dans un tronçon du conduit d'accouplement (54b), qui relie l'espace annulaire (15) du côté sortie avec un raccord du conduit de dérivation (56) étant placé un clapet anti-retour (25) qui s'ouvre de la soupape à siège à 3/2 voies (22) du côté sortie vers l'espace annulaire (15) du côté sortie.

**17.** Dispositif d'entraînement selon l'une quelconque des revendications précédentes, l'entraînement de réglage (444) étant hydraulique ou pneumatique et disposant d'un cylindre (76), dont la tige de piston est déplaçable par une machine (68), sur la tige de piston étant fixé le système de ressorts (12) du côté entraînement.

**18.** Dispositif d'entraînement selon la revendication 17, une liaison par moyen de pression de la machine (68) au cylindre (76) pouvant être bloquée et la machine (68) étant reliée par l'intermédiaire d'un conduit haute pression (458) avec le conduit d'accouplement (154a) et par l'intermédiaire d'un conduit de post-aspiration (438) avec l'accumulateur basse pression (24).

**19.** Dispositif d'entraînement selon la revendication 18, le conduit de post-aspiration (438) étant relié par l'intermédiaire de deux conduites de dérivation, dans chacune desquelles est placé un clapet anti-retour (70, 71) avec deux raccords de travail de la machine (68).

**20.** Dispositif d'entraînement selon l'une quelconque des revendications 11 à 16, le conduit basse pression (60) et le conduit d'accouplement (154a) étant reliés par l'intermédiaire d'un conduit de post-aspiration (138) dans lequel est placé un clapet anti-retour (164) ouvrant du conduit basse pression (60) vers le conduit d'accouplement (154a).

**21.** Dispositif d'entraînement selon l'une quelconque des revendications 10 à 20, dans le conduit d'accouplement (54a, 54c) étant placée une soupape à siège à 3/2 voies (20) du côté entraînement, par l'intermédiaire de laquelle l'espace annulaire (13) du côté entraînement peut être relié par l'intermédiaire d'un conduit haute pression (58a, 58b) avec un accumulateur haute pression (16).

**22.** Dispositif d'entraînement selon la revendication 21, le conduit basse pression (60) et le conduit haute pression (58a, 58b) étant reliés par l'intermédiaire d'un conduit de post-aspiration (38) dans lequel est placé un clapet anti-retour (64) ouvrant du conduit basse pression (60) vers le conduit haute pression (58a, 58b).

**23.** Dispositif d'entraînement selon la revendication 22, dans le conduit haute pression (58a, 58b), entre l'accumulateur haute pression (16) et un raccord du conduit de post-aspiration (38) étant placé au moins un cache (18a, 18b) vers lequel, dans un conduit de dérivation (62) parallèle est placé un clapet anti-retour (17) ouvrant vers l'accumulateur haute pression (16).

**24.** Dispositif d'entraînement selon l'une quelconque des revendications 16 à 23, un tronçon du conduit d'accouplement (54b), qui est placé entre le clapet anti-retour (25) et la soupape à siège à 3/2 voies (22) du côté sortie, pouvant être relié par l'intermédiaire d'une soupape à siège à 3/2 voies (32) avec le conduit basse pression (60) ou avec le conduit haute pression (58b) et dans un conduit (36a) reliant le tronçon du conduit d'accouplement (54b) avec la soupape à siège à 3/2 voies (32) étant placé un cache (34) et un clapet anti-retour (33) ouvrant vers la soupape à siège à 3/2 voies (32).

**25.** Dispositif d'entraînement selon l'une quelconque des revendications précédentes, pourvu d'un élément de support ou de fixation, qui est conçu sous la forme d'un bloc hydraulique sur lequel ou dans lequel sont placés le ou les accumulateur(s) de pression (16, 24), les soupapes (17, 20, 22, 25, 32, 33, 64 ; 70, 71, 72, 74 ; 164), les conduits (36a, 36b, 36c, 38, 54a, 54b, 54c, 56, 58a, 58b, 60, 62 ; 82 ; 138, 154 ; 458) et les canaux.

**26.** Dispositif d'entraînement selon l'une quelconque des revendications précédentes, le dispositif de blocage magnétique disposant d'un électro-aimant doté d'une bobine (27) et d'une ancre, qui sont reliées chacune avec l'un des systèmes de ressorts (3, 12).

**27.** Dispositif d'entraînement selon la revendication 26, la bobine (27) et l'ancre étant placées chacune sous forme annulaire et étant fixées chacune par l'intermédiaire d'un écarteur (26, 28) sur le système de ressorts (3, 12) associé et le ressort d'urgence (6) étant placé à l'intérieur des deux écarteurs (26, 28).

**28.** Dispositif d'entraînement selon la revendication 26 ou 27, le dispositif de blocage magnétique comportant un aimant permanent.

**29.** Dispositif d'entraînement selon l'une quelconque des revendications 2 à 28, l'entraînement de réglage (44) étant relié avec le système de ressorts (12) du côté entraînement et/ou l'entraînement de réglage (44) étant électrique, hydraulique ou pneumatique.

**30.** Dispositif d'entraînement selon l'une quelconque des revendications 6 à 29, entre les deux pistons (8, 9) étant placé un élément amortisseur.

Fig. 1

EP 2 547 935 B1

**Fig. 2**

EP 2 547 935 B1

Fig. 3

EP 2 547 935 B1

Fig. 4

Fig. 5

EP 2 547 935 B1

Fig. 6

Fig. 7

EP 2 547 935 B1

**Fig. 8a**

EP 2 547 935 B1

Fig. 8b

EP 2 547 935 B1

Fig. 8c

Schließrichtung

Druckniedere
Seite

E

Volumen
strom

U / S

a b
W W

a A b
W P T

P T

Fig. 8d

EP 2 547 935 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10152414 A1
- DE 19723624 A1
- GB 2057639 A
- WO 9813633 A
- DE 10308017 B4